# EUROPÄISCHE PATENTANMELDUNG

(11) **EP 4 653 715 A2**
(43) Veröffentlichungstag der Anmeldung: **26.11.2025**
(21) Anmeldenummer: 25205349.1
(22) Anmeldetag: 29.09.2025
(51) Int. Cl.: F16C 32/04

(54) **AKTIVES RADIALMAGNETLAGER ZUR DREHBAREN LAGERUNG EINER EINEN PUMPMECHANISMUS EINER VAKUUMPUMPE ANTREIBENDEN WELLE**

(71) Anmelder: Pfeiffer Vacuum Technology AG, 35614 Asslar (DE)
(72) Erfinder: WOLFF, Nikolai, 35764 Sinn-Fleisbach (DE); KOCH, Bernhard, 35619 Braunfels (DE)
(74) Vertreter: Manitz Finsterwald Patent- und Rechtsanwaltspartnerschaft mbB

(57) **Zusammenfassung**

Die vorliegende Erfindung betrifft unter anderem ein aktives Radialmagnetlager zur drehbaren Lagerung einer einen Pumpmechanismus einer Vakuumpumpe antreibenden Welle. Das Radialmagnetlager umfasst einen Statorring, der einen Stapel mehrerer Blechringe umfasst, die gemeinsam mehrere entlang des Innenumfangs des Statorrings voneinander beabstandete Zähne zur Aufnahme jeweiliger Magnetspulen bilden, sowie mehrere Spulenträger, die jeweils eine Durchgangsöffnung aufweisen und jeweils eine Magnetspule aufnehmen. Ein jeder Zahn des Statorrings erstreckt sich zur Aufnahme einer Magnetspule in die Durchgangsöffnung eines jeweiligen Statorrings. Darüber hinaus verfügt das Radialmagnetlager ferner über mehrere Form- und/oder Reibschlussmittel, mittels derer die Spulenträger an Ort und Stelle gehalten werden.

## Beschreibung

Die vorliegende Erfindung betrifft ein aktives Radialmagnetlager zur drehbaren Lagerung einer einen Pumpmechanismus einer Vakuumpumpe, insbesondere einer Turbomolekularpumpe, antreibenden Welle.

Bei aktiven Magnetlagern wird das zum Lagern der Welle benötigte Magnetfeld durch Spulen erzeugt. Diese werden üblicherweise vorab auf einen hier auch als Spulenträger bezeichneten Spulenkörper gewickelt, wobei diese so vorbereiteten Spulenkörper anschließend auf die radial nach innen abstehenden Zähnen eines Statorrings geschoben werden, der durch einen Stapel mehrerer Blechringe gebildet wird, die durch Kleben, beispielsweise mittels Backlack, Schweißen oder Stanzpaketieren miteinander verbunden sind. Konkret weist dabei ein jeder Blechring mehrere entlang seines Innenumfangs voneinander beabstandete Zungen auf, die gemeinsam mit den Zungen der anderen Blechringe im aufeinander gestapelten Zustand der Blechringe die Zähne des Statorrings bilden.

Der Statorring dient dabei in an sich bekannter Weise zum Bündeln und Weiterleiten des erzeugten Magnetfelds und zum Schließen eines magnetischen Kreises zwischen je zwei in Umfangsrichtung benachbarten Spulen und der zu lagernden Welle.

Damit sich die Spulenkörper von den Zähnen des Statorrings nicht lösen können, werden die Spulenkörper üblicherweise auf den Zähnen des Statorrings stoffschlüssig fixiert, insbesondere geklebt. Das Aufkleben der Spulenkörper auf die Zähne ist jedoch verhältnismäßig kosten- und zeitintensiv, da das Trocknen des Klebstoffs eine nicht unerhebliche Zeit in Anspruch nimmt. Darüber hinaus neigen die Klebstoffe, mittels derer die Spulenkörper auf die Zähne des Statorrings geklebt werden, unter Vakuum zum Ausgasen, was sich negativ nicht nur auf die Sauberkeit, sondern auch auf die Quantität eines zu erzeugenden Vakuums auswirken kann.

Der Erfindung liegt daher die Aufgabe zu Grunde, ein aktives Radialmagnetlager zur drehbaren Lagerung einer einen Pumpmechanismus einer Vakuumpumpe antreibenden Welle anzugeben, bei dem die Spulenträger bzw. Spulenkörper ohne den Einsatz von Klebstoffen zuverlässig an Ort und Stelle gehalten werden können.

Diese Aufgabe wird mit einem aktiven Radialmagnetlager gelöst, dass sich durch die Merkmale des Anspruchs 1 auszeichnet.

Konkret umfasst das Radialmagnetlager einen Statorring, der in an sich herkömmlicher Art und Weise durch einen Stapel mehrerer Blechringe gebildet wird, die gemeinsam mehrere entlang des Innenumfangs des Statorrings voneinander beabstandete Zähne zur Aufnahme jeweiliger Magnetspulen bilden. Ferner umfasst das Radialmagnetlager mehrere Spulenträger bzw. Spulenkörper, die jeweils eine Durchgangsöffnung aufweisen und jeweils eine Magnetspule aufnehmen. Hierbei erstreckt sich ebenfalls in an sich herkömmlicher Art und Weise ein jeder Zahn zur Aufnahme einer Magnetspule in bzw. durch die Durchgangsöffnung eines jeweiligen Spulenträgers. Erfindungsgemäß ist es dabei nun vorgesehen, dass das Radialmagnetlager ferner über mehrere Form- und/oder Reibschlussmittel verfügt, mittels derer die Spulenträger verliersicher fixiert sind und somit an Ort und Stelle gehalten werden.

Erfindungsgemäß werden also die Spulenträger nicht in herkömmlicher Art und Weise stoffschlüssig mittels eines Klebstoffs, sondern form- und/oder reibschlüssig fixiert. Es werden somit keine Klebstoffe zur Fixierung der Spulenträger benötigt, sodass während des Zusammenbaus des erfindungsgemäßen Radialmagnetlagers keine zusätzlichen Trocknungszeiten eingeplant werden müssen, die andernfalls für die Aushärtung der Klebstoffe benötigt werden. Da zur Befestigung der Spulenträger auf den Zähnen des Statorrings keine Klebstoffe benötigt werden, unterliegen unter Verwendung der erfindungsgemäßen Radialmagnetlager konstruierte Vakuumpumpen nicht der zuvor beschriebene Ausgasungsproblematik. Somit lassen sich durch Vakuumpumpen, deren Wellen unter Verwendung der erfindungsgemäßen Radialmagnetlager gelagert sind, auch qualitativ hochwertigere Vakua erzeugen.

Im Folgenden wird nun auf bevorzugte Ausführungsformen der Erfindung eingegangen. Weitere Ausführungsformen können sich auch aus den abhängigen Ansprüchen, der Figurenbeschreibung sowie den Zeichnungen ergeben.

So kann es gemäß einer ersten Ausführungsform vorgesehen sein, dass das Radialmagnetlager ferner zwei Klemmringe umfasst, zwischen denen sich der Statorring befindet und die miteinander verspannt sind. In diesem Falle ist der jeweilige Spulenträger form- und/oder reibschlüssig, insbesondere formschlüssig, an zumindest einem der Klemmringe gesichert ist. Obwohl die Klemmringe herkömmlich als Abstandhalter dienen und daher üblicherweise auch als Abstandhalter- bz. Distanzringe bezeichnet werden, da durch diese sichergestellt werden kann, dass sich das Radialmagnetlager in der Pumpe in der gewünschten Position befindet und den erforderlichen Abstand zu benachbarten Komponenten der Pumpe einhält, kommt den Klemmringen erfindungsgemäß eine Klemm-, Press- bzw.

Spannfunktion zu, durch die die Spulenträger in der gewünschten Weise an Ort und Stelle gehalten werden, wie dies nachfolgend genauer erläutert wird. Dementsprechend werden diese Distanz- bzw. Abstandhalterringe hier konsequenterweise als Klemmringe bezeichnet, zumal durch diese die einzelnen Blechringe des Statorrings zusätzlich zu deren Verklebung oder Verschweißung miteinander verspannt werden können..

Um die Spulenträger formschlüssig fixieren zu können, kann gemäß einer weiteren Ausführungsform zumindest einer der beiden Klemmringe eine ringförmig umlaufende Stirnkontur aufweisen, welche zum Teil an dem Statorring anliegt und eine Hinterschneidung bildet. Demgegenüber kann der jeweilige Spulenträger zumindest eine sich radial nach außen erstreckende Lippe aufweisen, an deren freien Ende ein sich in axialer Richtung erstreckender Vorsprung ausgebildet ist, welcher formschlüssig in die Hinterschneidung der Stirnkontur des jeweiligen Klemmrings eingreift.

Gemäß einer konkreten Ausgestaltung kann die Stirnkontur des jeweiligen Klemmrings beispielsweise eine ringförmig umlaufende erste Stirnfläche, die an dem Statorring anliegt, eine radial innerhalb der ersten Stirnfläche ringförmig umlaufende zweite Stirnfläche, die in axialer Richtung von dem Statorring beabstandet ist, und eine ringförmig umlaufende Nut zwischen der ersten und der zweiten Stirnfläche aufweisen, die die Hinterschneidung des jeweiligen Statorrings bildet. Aufgrund des Abstands zwischen der zweiten Stirnfläche und dem Statorring kann sich somit die jeweilige Lippe eines jeweiligen Spulenträgers durch diesen Abstand in radialer Richtung nach außen hindurcherstrecken, sodass der am freien Ende der jeweiligen Lippe befindliche Vorsprung formschlüssig in die durch die Nut zwischen den beiden Stirnflächen gebildete Hinterschneidung eingreifen kann, wodurch der Spulenträger formschlüssig an dem Klemmring gesichert ist.

Darüber hinaus kann es gemäß einer weiteren Ausführungsform vorgesehen sein, dass die jeweilige Lippe des Spulenträgers eine Dicke aufweist, die dem Abstand zwischen der zweiten Stirnfläche und dem Statorring entspricht oder etwas größer als dieser Abstand ist. In diesem Falle wird die jeweilige Lippe des Spulenträgers reibschlüssig zwischen dem Statorring und die zweite Stirnfläche des Klemmrings eingeklemmt, sodass in diesem Falle der Spulenträger sowohl form- als auch reibschlüssig an dem Klemmring gesichert ist.

Gemäß noch einer weiteren Ausführungsform kann es vorgesehen sein, dass der Vorsprung der jeweiligen Lippe eine Axialerstreckung aufweist, welche größer ist als die Tiefe der Nut gegenüber der ersten Stirnfläche. Vorzugsweise kann es dabei vorgesehen sein, dass das freie Ende des jeweiligen Vorsprungs einen Grat ausbildet. Da der Spulenträger aus Kunststoff gefertigt ist und der Vorsprung gegenüber der Nut des Klemmrings ein gewisses Übermaß aufweist, wird somit der Vorsprung in axialer Richtung gequetscht bzw. gestaucht, wenn der Klemmring gegen den Statorring verspannt wird. Durch die Quetschung des Vorsprungs innerhalb der Nut füllt der sich auf diese Weise verformte Vorsprung die Nut im Wesentlichen vollständig aus, wodurch ein etwaiges Radialspiel zwischen Spulenträger und Zahn weitestgehend eliminiert wird.

Gemäß einer anderen Ausführungsform kann es vorgesehen sein, dass zumindest einer der beiden Klemmringe eine ringförmig umlaufende Stirnkontur aufweist, welche eine ringförmig umlaufende erste Stirnfläche, die an dem Statorring anliegt, und radial innerhalb der ersten Stirnfläche eine ringförmig umlaufende Schneidkante aufweist, welche in axialer Richtung von dem Statorring und in radialer Richtung von der ersten Stirnfläche beabstandet ist. Auch in diesem Falle weist der vorzugsweise aus Kunststoff gefertigte Spulenkörper zumindest eine sich radial nach außen erstreckende Lippe auf, in die in diesem Falle die Schneidkante des jeweiligen Klemmrings eingepresst ist, wodurch auch in diesem Falle der Spulenträger formschlüssig an dem Klemmring gesichert ist.

Gemäß einer weiteren Ausführungsform, die mit den zuvor beschriebenen Ausführungsformen kombiniert werden kann, kann es vorgesehen sein, dass die Durchgangsöffnung eines jeden Spulenträgers eine Oberfläche aufweist, an der eine oder mehrere Erhebungen ausgebildet sind. Die in Rede stehenden Erhebungen weisen dabei derartige Höhenabmessungen auf, dass in der Durchgangsöffnung einander gegenüberliegende Erhebungen einen lichten Abstand definieren, der geringfügig kleiner ist als die Breiten- bzw. Höhenabmessung des jeweiligen Zahns. Die Erhebungen werden somit beim Aufschieben des Spulenträgers auf den jeweiligen Zahn geringfügig komprimiert, wodurch der Spulenträger in diesem Falle reibschlüssig auf dem jeweiligen Zahn gesichert wird. Bei den in Rede stehenden Erhebungen kann es sich beispielsweise um punktuelle Noppen mit beispielsweise runder, eckiger oder länglicher Gestalt und/oder um sich in radialer Richtung erstreckende Rippen handeln.

Zusätzlich kann der sich in die Durchgangsöffnung erstreckende Zahn eine oder mehrerer Ausnehmungen aufweisen, welche komplementär zu der einen oder den mehreren Erhebungen ausgebildet sind, um so die Ausnehmungen formschlüssig aufnehmen zu können. Bei dieser Ausführungsform verrasten also gewissermaßen die Spulenträger mit ihren in der Durchgangsöffnung ausgebildeten Erhebungen in den Ausnehmungen des jeweiligen Zahns, wodurch die Spulenträger besonders zuverlässig durch Formschluss an Ort und Stelle gehalten werden. Beispielsweise können bei dieser Ausführungsform die Erhebungen als sich in axialer Richtung erstreckende Rippen und die Ausnehmungen als sich in axialer Richtung erstreckende Nuten ausgebildet sein, in die die Rippen formschlüssig eingreifen.

Egal ob es zwischen den Erhebungen des Spulenträgers und dem jeweiligen Zahn zu einem Form- oder Reibschluss kommt, kann es gemäß einer weiteren Ausführungsform vorgesehen sein, dass die Erhebungen aus einem anderen Kunststoffmaterial als der Spulenträger und insbesondere aus einem Kunststoffmaterial gefertigt sind, das einen geringeren Elastizitätsmodul aufweist als das Kunststoffmaterial des Spulenträgers. Die Erhebungen können sich somit beim Aufschieben des Spulenträgers auf den jeweiligen Zahn des Statorrings leichter verformen, ohne dass es dabei zu einer Beschädigung der jeweiligen Erhebungen kommen kann.

Gemäß einer weiteren Ausführungsform kann jeder Spulenträger eine Buchse mit einem ersten Ende und einem zweiten Ende umfassen, wobei die Buchse an ihren beiden Enden jeweils einen Flansch zur Begrenzung eines Aufnahmebereichs für die jeweilige Magnetspule aufweist. Durch die beiden Flansche wird somit also sichergestellt, dass die Magnetspule nicht von dem Spulenträger bzw. dessen Buchse abrutschen kann.

Gemäß noch einer weiteren Ausführungsform kann es vorgesehen sein, dass an der jeweiligen Lippe des Spulenträgers und insbesondere zwischen den freien Enden der jeweiligen Lippe und dem am ersten Ende der Buchse befindlichen Flansch jeweils ein sich in axialer Richtung erstreckender Steg ausgebildet ist, der zusammen mit dem am ersten Ende der Buchse befindlichen Flansch einen Kabelkanal zur Aufnahme der die Magnetspule bestromenden Drähte definiert. Bei dieser Ausführungsform kann es insbesondere vorgesehen sein, dass in dem am ersten Ende der Buchse befindlichen Flansch zumindest ein Schlitz ausgebildet ist, durch den die die Magnetspule bestromenden Drähte hindurchgeführt werden können. Die die Magnetspulen bestromenden Drähte der einzelnen Magnetspulen können somit in Umfangsrichtung geordnet in den in Rede stehenden Kabelkanälen bis zu einer Stelle entlanggeführt werden, wo sie gemeinsam in radialer oder axialer Richtung aus dem Magnetlager herausgeführt werden.

Erfindungsgemäß wird ferner eine Vakuumpumpe und insbesondere eine Turbomolekularpumpe vorgestellt, welche wenigstens ein aktives Radialmagnetlager umfasst, wie es zuvor beschrieben wurde und welches eine einen Rotor der Vakuumpumpe antreibende Welle drehbar lagert.

Im Folgenden wird die Erfindung rein beispielhaft unter Bezugnahme auf die Figuren beschrieben: Es zeigen:
- Fig. 1: einen Schnitt entlang der Drehachse ein Ausführungsbeispiel einer erfindungsgemäßen Turbomolekularpumpe,
- Fig. 2: einen Schnitt entlang der Drehachse die Spindeleinheit der Pumpe von Fig. 1,
- Fig. 3: eine perspektivische Darstellung eines aktiven Radialmagnetlagers;
- Fig. 4: eine perspektivische Darstellung des Statorrings des Radialmagnetlagers der Fig. 3 mit montierten Spulenträgern;
- Fig. 5: eine Schnittdarstellung eines erfindungsgemäßen Radialmagnetlagers der Fig. 3 gemäß einer Ausführungsform;
- Fig. 6: einen vergrößerten Ausschnitt aus der Fig. 5;
- Fig. 7: eine perspektivische Darstellung einer Ausführungsform eines erfindungsgemäß ausgebildeten Spulenträgers;
- Fig. 8: eine Seitenansicht des Spulenträgers der Fig. 7;
- Fig. 9: eine Schnittdarstellung eines Klemmrings gemäß einer Ausführungsform;
- Fig. 10: einen vergrößerten Ausschnitt aus der Fig. 9;
- Fig. 11: eine Schnittdarstellung eines Abschnitts eines erfindungsgemäßen Radiallagers der Fig. 3 gemäß einer zweiten Ausführungsform;
- Fig. 12: eine Schnittdarstellung eines Klemmrings gemäß einer anderen Ausführungsform;
- Fig. 13: einen vergrößerten Ausschnitt aus der Fig. 12;
- Fig. 14: eine perspektivische Darstellung einer anderen Ausführungsform eines erfindungsgemäß ausgebildeten Spulenträgers;
- Fig. 15: eine Seitenansicht des Spulenträgers der Fig. 14;
- Fig. 16: eine perspektivische Darstellung einer weiteren Ausführungsform eines Spulenträgers;
- Fig. 17: eine Frontansicht auf den Spulenträger der Fig. 16;
- Fig. 18: eine perspektivische Darstellung eines Statorrings gemäß einer Ausführungsform; und
- Fig. 19: eine Schnittdarstellung einer weiteren Ausführungsform eines erfindungsgemäß ausgebildeten Spulenträgers.

An dieser Stelle sei vorausgeschickt, dass, sofern sowohl nachfolgend als auch zuvor von einer radialen oder axialen Orientierung die Rede ist, sich diese Orientierungsangaben auf die Achse einer mittels des erfindungsgemäßen Radialmagnetlagers zu lagernden Welle beziehen.

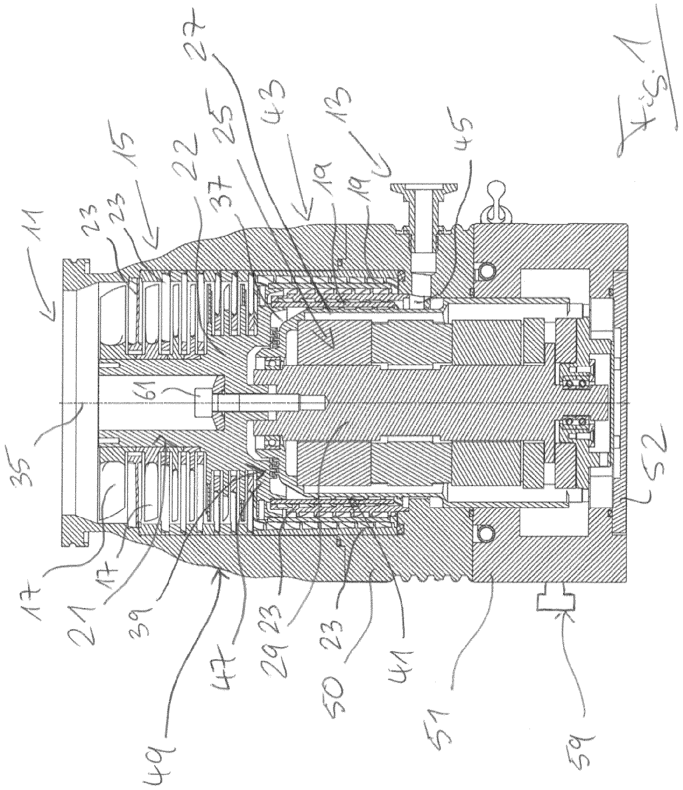

Die Turbomolekularpumpe gemäß Fig. 1 umfasst ein zylindrisches Pumpengehäuse 49 mit einem hochvakuumseitigen Einlass 11 und einem radialen vorvakuumseitigen Auslass 13, der in einem Zwischenstück 50 des Gehäuses 49 ausgebildet und mit einem Vorvakuumanschluss versehen ist. An seiner vom Einlass 11 abgewandten Seite ist das Gehäuse 49 mit einem Unterteil 51 versehen, das an seiner Unterseite mittels eines Deckelelements 52 verschlossen ist. Ein Sperrgasanschluss 59, auf den an anderer Stelle näher eingegangen wird, ist hier rein exemplarisch am Unterteil 51 dargestellt.

Das Pumpsystem der Turbomolekularpumpe umfasst eine Turbomolekularpumpstufe 15 mit einer Mehrzahl von abwechselnd angeordneten Rotorscheiben 17 und Statorscheiben 23 sowie ein der Turbomolekularpumpstufe 15 in einer vom Einlass 11 zum Auslass 13 verlaufenden Pumprichtung nachgeordnetes Holweckpumpsystem 43. Von den Rotorscheiben 17 und den Statorscheiben 23 der Turbomolekularpumpstufe 15 sind in Fig. 1 nur einige exemplarisch mit einem Bezugszeichen versehen.

Das Holweckpumpsystem 43, auf dessen Aufbau an anderer Stelle näher eingegangen wird, umfasst eine sogenannte geschachtelte Anordnung von radial ineinander liegenden Holweckpumpstufen, die von Holweckhülsen 19 und Statorelementen 23 gebildet werden.

Ein Rotor 21 des Pumpsystems umfasst zusätzlich zu den erwähnten Rotorelementen, also den Rotorscheiben 17 der Turbomolekularpumpstufe 15 und den Holweckhülsen 19 des Holweckpumpsystems 43, einen einstückig ausgebildeten Halter 22, der zwei im Wesentlichen zylindrische Abschnitte unterschiedlichen Durchmessers für die Rotorscheiben 17 sowie einen ringförmigen Träger 47 für die beiden Holweckhülsen 19 umfasst. Die Rotorscheiben 17 des Abschnitts mit dem größeren Durchmesser sind einstückig mit dem Halter 22 ausgebildet. Die anderen, näher am Einlass 11 gelegenen Rotorscheiben 17 sind durch Aufpressen auf den den kleineren Durchmesser aufweisenden Abschnitt des Halters 22 drehfest mit diesem verbunden.

Während des Betriebs der dann an einen zu evakuierenden Rezipienten angeschlossenen Turbomolekularpumpe rotiert der Rotor 21 um eine mit der Mittelachse des zylindrischen Pumpgehäuses 49 zusammenfallenden Drehachse 35, wobei die Rotorscheiben 17 pumpwirksam mit den Statorscheiben 23 und die Holweckhülsen 19 pumpwirksam mit den Holweckstatoren 23 zusammenwirken, um ein jeweiliges Prozessgas vom Einlass 11 zum Auslass 13 zu fördern.

Aufbau und Funktionsweise eines solchen Pumpsystems einer Turbomolekularpumpe, wie vorstehend erläutert, sind grundsätzlich bekannt.

Zusätzlich zu dem erläuterten Pumpsystem aus Rotor 21 und mit diesem zusammenwirkenden Statorelementen 23 umfasst die Turbomolekularpumpe eine Spindeleinheit 25, die hinsichtlich Aufbau und Funktionsweise als solche ebenfalls grundsätzlich bekannt ist.

Die Spindeleinheit 25 ist als eine Einheit handhabbar und somit als Ganzes montierbar. Im dargestellten zusammengesetzten Zustand ist die Spindeleinheit 25 axial und radial von dem Rotor 21 sowie - axial an den Rotor 21 anschließend - radial von dem Zwischenstück 50 des Gehäuses 49 und dem Unterteil 51 umgeben.

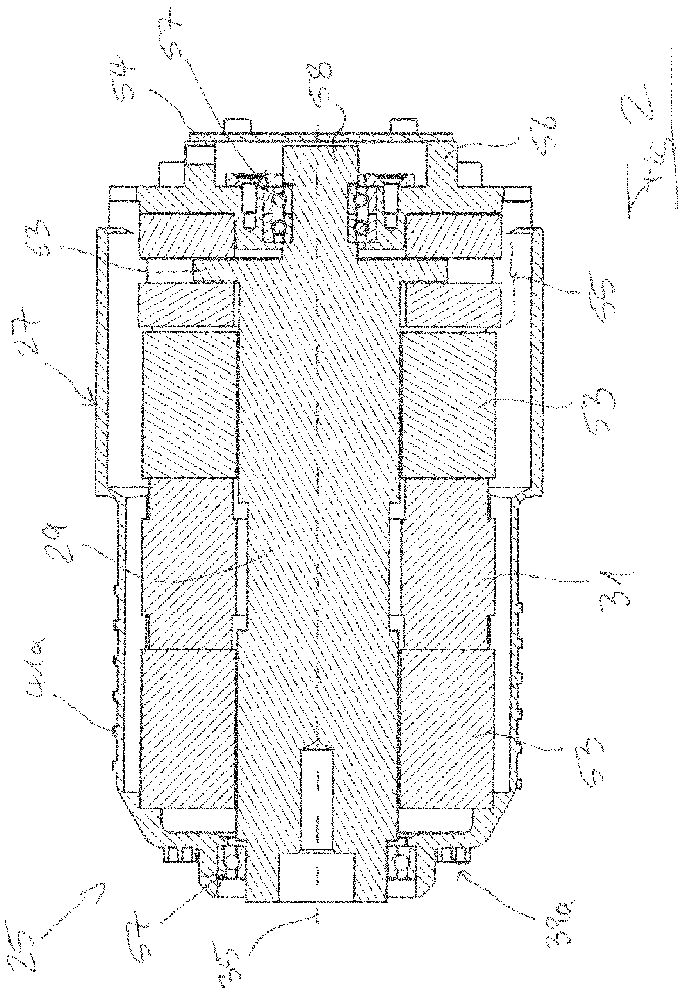

Die Spindeleinheit 25 umfasst ein äußeres Spindelgehäuse 27, in welchem eine Welle 29 sowie für diese Welle 29 ein Antriebsmotor und eine Lagereinrichtung angeordnet sind. Auf diesen Aufbau der Spindeleinheit 25 wird nachfolgend anhand von Fig. 2 näher eingegangen. Das Spindelgehäuse 27 umfasst zwei Zylinderabschnitte mit unterschiedlichem Durchmesser, wobei der den kleineren Durchmesser aufweisende Zylinderabschnitt näher am Rotor 21 gelegen ist.

Über den Antriebsmotor und somit die Welle 29 wird der Rotor 21 während des Betriebs in Rotation versetzt. Hierzu ist der Halter 22 des Rotors 21 durch eine Schraube 61 mit der Welle 29 verbunden. Das rotierende System der Turbomolekularpumpe umfasst somit zusätzlich zu dem Rotor 21 die Welle 29.

Während des Pumpbetriebs ist die Turbomolekularpumpe einlassseitig beispielsweise an einem zu evakuierenden Rezipienten angeschlossen. Ein zu pumpendes Gas strömt vom Einlass 11 durch die Turbomolekularpumpstufe 15 und das Holweckpumpsystem 43 zu einem Ausgang 45 des Holweckpumpsystems 43, der zum Auslass 13 führt. Für das von der Turbomolekularpumpstufe 15 kommende Prozessgas umfasst das Holweckpumpsystem 43 drei radial ineinander liegende Holweckpumpstufen. Die von radial außen gezählt dritte Holweckpumpstufe mündet an dem erwähnten Ausgang 45.

Die Turbomolekularpumpe gemäß Fig. 1 zeichnet sich dadurch aus, dass ein Zwischenraum 37 zwischen der Außenseite des Spindelgehäuses 27 und der Innenseite des Rotors 21 dazu genutzt wird, eine oder mehrere Sperrstufen - im vorliegenden Ausführungsbeispiel zwei Sperrstufen 39, 41 - zu bilden, um auf diese Weise die innerhalb des Spindelgehäuses 27 befindlichen Komponenten - dabei insbesondere die Lagereinrichtung - vor äußeren Einflüssen zu schützen, insbesondere vor dem zum Ausgang 45 des Holweckpumpsystems 43 geförderten Prozessgas, aber auch - wie im Einleitungsteil erwähnt - vor anderen äußeren Einflüssen wie beispielsweise Verunreinigungen in Form von Staub.

Eine axiale Sperrstufe 39 in Form einer Labyrinthdichtung befindet sich in einem axialen Abschnitt des Zwischenraumes 37. Die Labyrinthdichtung wird von axial einander zugewandten Flächen auf der Außenseite des Spindelgehäuses 27 und der Innenseite des Trägers 47 des Halters 22 des Rotors 21 gebildet. Die beiden einander zugewandten Seiten von Spindelgehäuse 27 und Träger 47 bilden folglich gemeinsam die hier als Labyrinthdichtung ausgebildete Sperrstufe 39.

Eine radiale Sperrstufe 41, die sich somit in einem radialen Abschnitt des Zwischenraumes 37 befindet, wird gemeinsam von der radialen Innenseite der radial innen liegenden Holweckhülse 19 des Holweckpumpsystems 43 und der insofern als Holweckstator wirksamen Außenseite des zylindrischen Abschnitts des Spindelgehäuses 27 gebildet. Diese radiale Sperrstufe 41 ist folglich eine Holweckpumpstufe, die in Richtung zum Ausgang 45 des Holweckpumpsystems 43 pumpwirksam ist.

Wenn während des Betriebs der Turbomolekularpumpe an den Sperrgasanschluss 49 eine Sperrgasquelle angeschlossen ist, dann kann Sperrgas in einer hier nicht näher dargestellten Weise durch die Spindeleinheit 25, also durch das Innere des Spindelgehäuses 27 hindurch, in den axialen Abschnitt des Zwischenraumes 37 strömen, und zwar insbesondere durch ein radiales Notlager hindurch.

Somit bilden die beiden Sperrstufen 39, 41 und gegebenenfalls das Sperrgas gemeinsam eine Barriere für äußere Einflüsse, wie insbesondere das zum Ausgang 45 des Holweckpumpsystems 43 geförderte Prozessgas, die somit daran gehindert werden, in das Innere des Spindelgehäuses 27 zu gelangen. Besonders vorteilhaft ist hierbei die in Richtung des Ausgangs 45 gerichtete Pumpwirkung der als Holweckpumpstufe ausgebildeten radialen Sperrstufe 41. Anstelle der Labyrinthdichtung kann als axiale Sperrstufe 39 beispielsweise eine Siegbahnpumpstufe vorgesehen sein, die ebenfalls eine zum Ausgang 45 des Holweckpumpsystems 43 gerichtete Pumpwirkung bereitstellt.

Somit werden in vorteilhafter Weise die einander zugewandten Seiten von Spindelgehäuse 27 und Rotor 21 dazu genutzt, in dem hierdurch gebildeten Zwischenraum 37 eine Barriere gegen das Eindringen von Verunreinigungen zu bilden, die ansonsten die innerhalb des Spindelgehäuses 27 befindlichen Komponenten beeinträchtigen könnten.

Der Aufbau der Spindeleinheit 25 ist auch Fig. 2 zu entnehmen. Aktive radiale Magnetlager 53, ein Antriebsmotor 31 sowie ein aktives axiales Magnetlager 55 für die Welle 29 sind schematisch dargestellt. Das aktive axiale Magnetlager 55 wirkt mit einer an der Welle 29 ausgebildeten Lagerscheibe 63 aus magnetisierbarem Material zusammen. Zur Regelung der Axialposition der Welle 29 und somit des aktiven axialen Magnetlagers 55 ist ein Axialsensor 54 vorgesehen, der die Größe des axialen Spaltes misst, den der Axialsensor 54 mit einem Stirnabschnitt 58 der Welle 29 bildet.

Des Weiteren sind in Fig. 2 als Wälzlager ausgebildete radiale Notlager 57 dargestellt, die an den beiden axialen Endbereichen der Welle 29 angeordnet sind. Ein jeweiliger äußerer Lagerring ist dabei an dem stationären Spindelgehäuse 27 abgestützt, während ein jeweiliger radial innerer Lagerring des betreffenden Notlagers 57 der radialen Außenseite eines Abschnitts der Welle 29 zugewandt ist.

Das näher am Axialsensor 54 gelegene Notlager 57 ist dabei von einer Lagerfassung 56 aufgenommen, die zudem als axiales Widerlager für das aktive axiale Magnetlager 55 dient und an der der Axialsensor 54 angebracht ist.

Zur Bildung der anhand von Fig. 1 erläuterten Sperrstufen 39, 41 ist an einem zylindrischen Abschnitt der Außenseite des Spindelgehäuses 27 ein Holweckgewinde 41a ausgebildet. Dieses Holweckgewinde 41a ist hier eingängig ausgeführt. Alternativ kann auch ein mehrgängiges Holweckgewinde 41a vorgesehen sein. Wie in Verbindung mit Fig. 1 erläutert, bildet dieses Holweckgewinde 41a zusammen mit der radialen Innenseite der radial innen liegenden Holweckhülse 19 des Holweckpumpsystems 43 eine pumpwirksame Holweckpumpstufe.

Eine in axialer Richtung weisende Ringfläche des Spindelgehäuses 27, die in Höhe des einen Notlagers 57 gelegen ist, ist mit drei konzentrisch angeordneten, jeweils in axialer Richtung abstehenden Wandabschnitten versehen und bildet somit den einen Teil der erwähnten Labyrinthdichtung, welche die axiale Sperrstufe 39 bildet. Diese Anordnung konzentrischer Wandabschnitte 39a greift in eine hierzu passende Anordnung konzentrischer Wandabschnitte 39b auf der zugewandten, in axialer Richtung weisenden Fläche des Trägers 47 des Halters 22 des Rotors 21 ein, um auf diese Weise die beschriebene Labyrinthdichtung 39 als axiale Sperrstufe zu bilden.

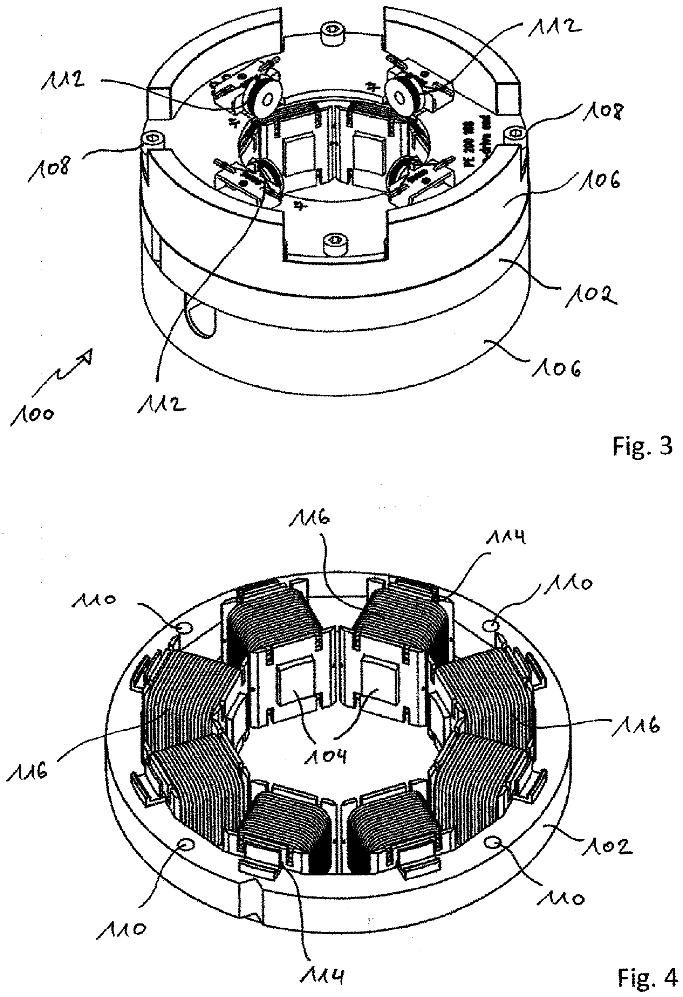

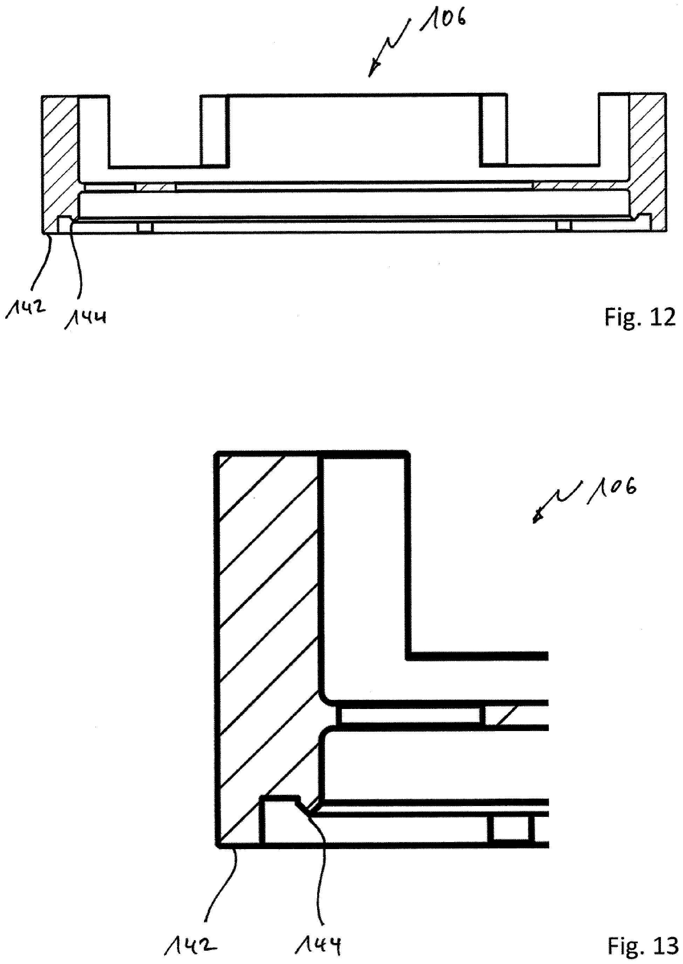

Im Folgenden wird nun unter Bezugnahme auf die Figs. 3 bis 19 auf die erfindungsgemäße aus Ausgestaltung des zuvor bereits erwähnten aktiven radialen Magnetlagers 53 genauer eingegangen, welches nachfolgend als Radialmagnetlager 100 bezeichnet wird.

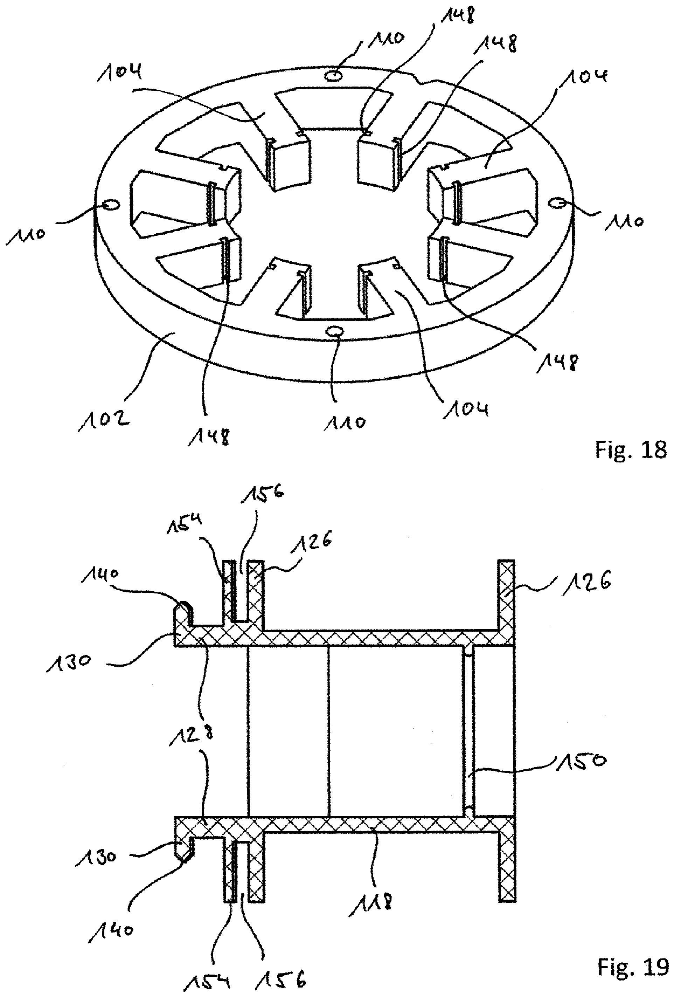

Zunächst wird unter Bezugnahme auf die Figs. 3 bis 5 der grundsätzliche Aufbau eines erfindungsgemäßen aktiven Radialmagnetlagers 100 erläutert. Dieses umfasst in an sich herkömmlicher Art und Weise einen Statorring 102, welcher entlang seines Innenumfangs mehrere in Umfangsrichtung voneinander beabstandete Zähne 104 aufweist (siehe hierzu auch die Fig. 18), welche vom Innenumfang des Statorrings 102 radial nach innen abstehen. Der Statorring 102 wird dabei ebenfalls in an sich herkömmlicher Art und Weise durch einen Stapel mehrerer hier nicht einzeln visualisierter Blechringe gebildet, die durch Kleben, beispielsweise mittels Backlack, Schweißen oder Stanzpaketieren miteinander verbunden sind. Jeder Blechring weist hierbei mehrere entlang seines Innenumfangs voneinander beabstandete Zungen auf, die gemeinsam mit den Zungen der anderen Blechringe im aufeinandergestapelten Zustand der Blechringe die Zähne 104 des Statorrings 102 bilden.

Das Radialmagnetlager 100 verfügt ferner über zwei hier als Klemmringe 106 bezeichnete Abstandhalteringe, zwischen denen sich der Statorring 102 bzw. der den Statorring 102 bildende Blechstapel befindet. Die beiden Klemmringe 106 werden dabei mittels mehrerer Schrauben 108 miteinander verspannt, wozu sich diese Schrauben 108 durch in dem Statorring 102 ausgebildete Axialbohrungen 110 hindurcherstrecken, siehe hierzu die Fig. 4. Obwohl der Blechstapel, der den Statorring 102 bildet, wie bereits erwähnt durch Kleben, Schweißen oder Stanzpaketieren zusammengehalten wird, können die einzelnen Blechringe des Blechstapels durch diese Klemmringe 106 somit zusätzlich zusammengehalten werden.

Wie der der Fig. 3 entnommen werden kann, dient der obere Klemmring 106 auch als Sensorträger, da an diesem die zur Lageerfassung der zu lagernden Welle (nicht dargestellt) benötigten Positionssensoren 112 montiert sind. Grundsätzlich dienen die Klemmringe 106 jedoch als Abstandhalter, durch die sichergestellt werden kann, dass sich das Radialmagnetlager 100 in der Pumpe in der gewünschten Position befindet und den erforderlichen Abstand zu benachbarten Komponenten der Pumpe einhält. Darüber hinaus kommt den Klemmringen 106 erfindungsgemäß jedoch auch eine Klemm- bzw. Spannfunktion zu, durch die die Spulenträger in der gewünschten Weise an Ort und Stelle gehalten werden, wie dies nachfolgend genauer erläutert wird.

Wie der Fig. 4 entnommen werden kann, ist auf jeden Zahn 104 des Statorrings 102 ein Spulenträger 114 mit einer darauf aufgewickelten Magnetspule 116 aufgesteckt. Die Spulenträger 114 sind aus einem Kunststoffmaterial gefertigt und weisen jeweils eine im Querschnitt betrachtet im Wesentlichen rechteckige Buchse 118 auf, welche eine Durchgangsöffnung 120 zur Aufnahme des jeweiligen Zahns 104 definiert. Die Durchgangsöffnung 120 erstreckt sich dabei von einem ersten Ende 122 der Buchse 118 zu einem zweiten Ende 124, wobei sich das erste Ende 122 im auf den jeweiligen Zahn 104 aufgesteckten Zustand der Buchse 118 radial außen und das zweite Ende 124 radial innen nahe des jeweiligen freien Endes des jeweiligen Zahns 104 befindet.

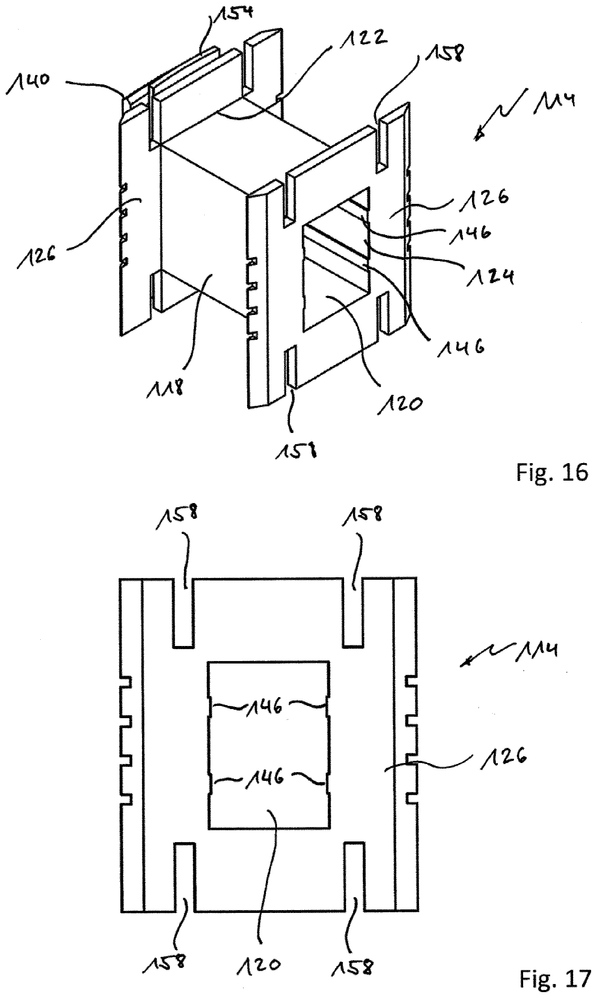

Damit die Magnetspule 116 von der jeweiligen Buchse 118 nicht abrutschen kann, sind an deren beiden Enden 122, 124 jeweilige Flansche 126 ausgebildet, wobei sich zwischen diesen beiden Flanschen 126 der Aufnahmebereich für die jeweilige Magnetspule 116 befindet, siehe hierzu insbesondere die Fig. 16.

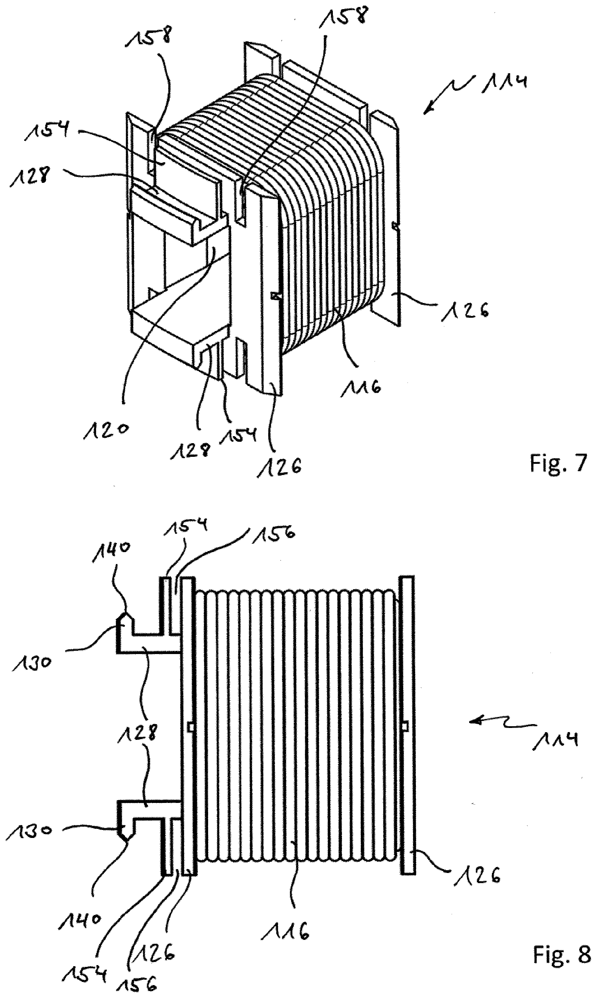

Wie nun am besten den Figs. 7 und 8 entnommen werden kann, weisen die Spulenträger 114 bei dieser Ausführungsform zwei sich radial nach außen erstreckende Lippen 128 auf, welche von dem Flansch 126 am ersten Ende 122 der Buchse 118 abstehen und in axialer Richtung voneinander um ein Maß beabstandet sind, dass der axialen Dicke des Statorrings 102 entspricht. Am freien Ende der beiden Lippen 128 ist jeweils ein sich in axialer Richtung erstreckender Vorsprung 130 ausgebildet, wobei diese Vorsprünge 130 in axialer Richtung voneinander wegweisen und an ihrem freien Ende jeweils einen Grat 140 ausbilden.

Wie nachfolgend noch genauer erläutert wird, greifen die Spulenträger 118 mit ihren Lippen 128 und den daran ausgebildeten Vorsprüngen 130 in an den Klemmringen 106 ausgebildete Hinterschneidungen 132 ein, wodurch der jeweilige Spulenträger 114 zuverlässig an Ort und Stelle gehalten wird, indem er formschlüssig an den beiden Klemmringen 106 gesichert ist.

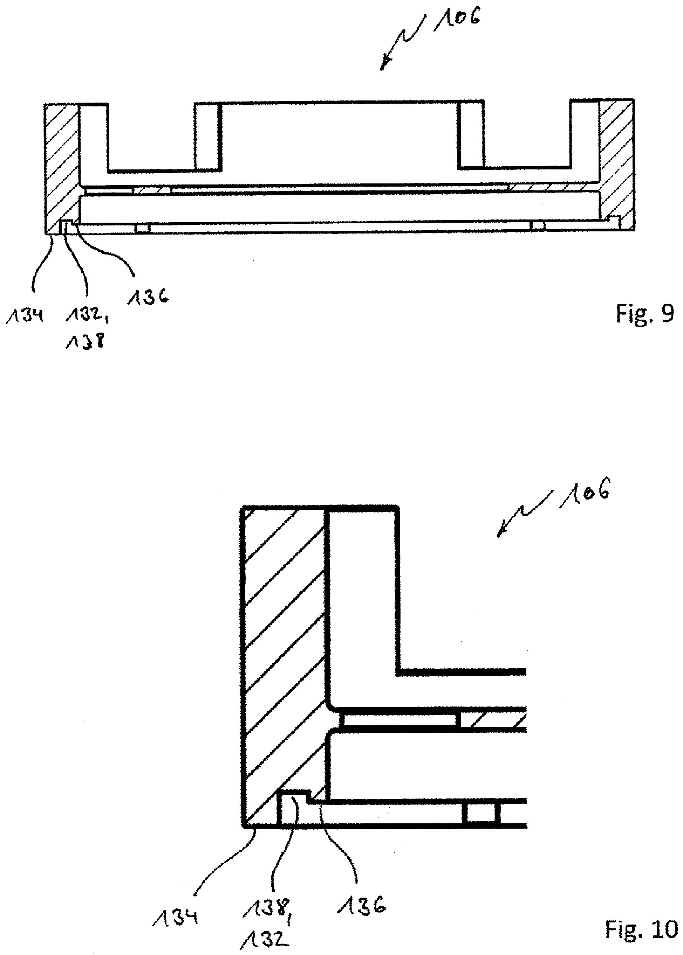

Die in Rede stehende Hinterschneidung 132 ist dabei entlang der ringförmig umlaufenden Stirnkontur des jeweiligen Klemmrings 106 ausgebildet, über die dieser an dem Statorring 102 anliegt. Wie diesbezüglich insbesondere den Figs. 9 und 10 entnommen werden kann, weist der jeweilige Klemmring 106 eine ringförmig umlaufende Stirnkontur auf, welche ein ringförmig umlaufende erste Stirnfläche 134 umfasst, über die der jeweilige Klemmring 106 am Statorring 102 anliegt. Radial innerhalb der ersten Stirnfläche 134 und konzentrisch zu dieser verfügt die Stirnkontur ferner über eine ringförmig umlaufende zweite Stirnfläche 136, welche jedoch im Unterschied zu der ersten Stirnfläche 134 von dem Statorring 102 in axialer Richtung um ein Maß beabstandet ist, das der Dicke der jeweiligen Lippe 128 entspricht. Zwischen den beiden Stirnflächen 134, 136 befindet sich eine ringförmig umlaufende Nut 138, welche die bereits zuvor erwähnte Hinterschneidung 132 zur formschlüssigen Aufnahme des jeweiligen Vorsprungs 130 bildet.

Werden nun auf den Statorring 102 nach der Montage der Spulenträger 114 auf den Zähnen 104 die Klemmringe 106 beiderseits des Statorrings 102 montiert und gegen diesen verspannt, so gelangen hierbei die Vorsprünge 130 der an den freien Enden der Lippen 128 der Spulenträger 114 ausgebildeten Vorsprünge 130 in die Nut 138 der jeweiligen Klemmringe 106. Auf diese Art und Weise sind die Spulenträger 114 formschlüssig an den Klemmringen 106 gesichert und können sich somit während des Betriebs des Radialmagnetlagers 100 nicht lösen.

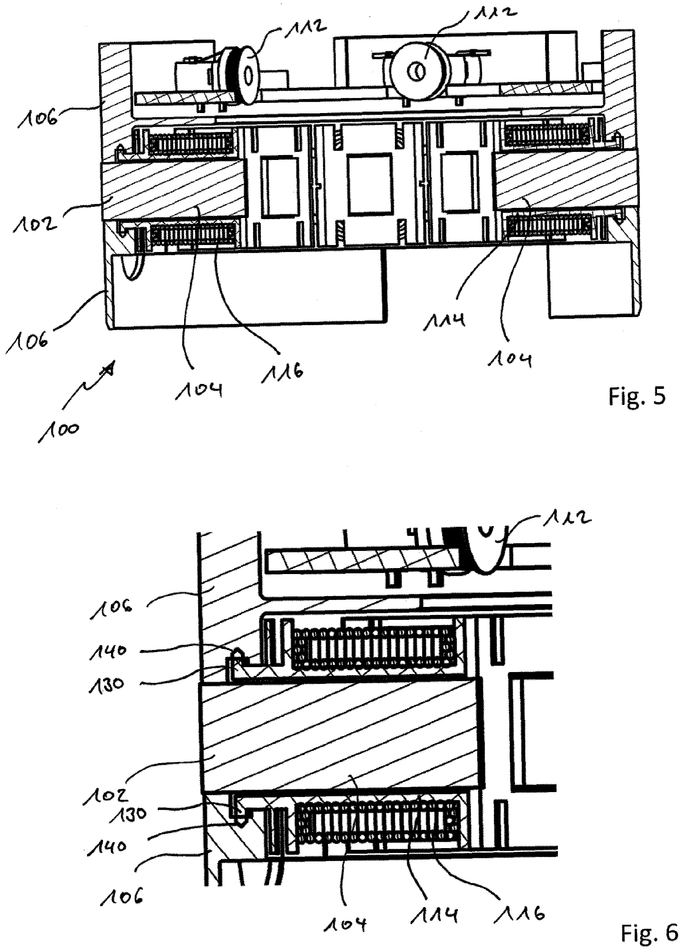

Die Axialerstreckung der Vorsprünge 130 einschließlich der daran ausgebildeten Grate 140 ist dabei so gewählt, dass diese etwas größer ist als die Tiefe der jeweiligen Nut 138 gegenüber der ersten Stirnfläche 134 des Statorrings 102. Dies kann so der Fig. 6 entnommen werden, aus der hervorgeht, dass sich der jeweilige Vorsprung 130 bis über den Nutgrund der jeweiligen Nut 138 hinwegerstreckt. Entgegen dieser Darstellung existiert dieser Zustand jedoch unter realen Bedingungen nicht; vielmehr wird aufgrund der Tatsache, dass der jeweilige Vorsprung 130 eine Axialerstreckung aufweist, die etwas größer ist als die Tiefe der jeweiligen Nut 138, der jeweilige Vorsprung 130 in axialer Richtung gequetscht, wenn die Klemmringe 106 gegen den Statorring 102 verspannt werden. Die auf diese Weise verformten Vorsprünge 130 füllen somit die Nut 138 zwischen den beiden Stirnflächen 134, 136 im Wesentlichen aus, wodurch die Spulenträger 114 besonders zuverlässig und spielfrei an den Zähnen 104 gesichert sind.

Zusätzlich können die Spulenträger 114 auch reibschlüssig an dem Klemmring 106 gesichert sein bzw. werden, wozu die Dicke der jeweiligen Lippe 128 der Spulenträger 114 so zu wählen ist, dass diese dem Abstand zwischen der zweiten Stirnfläche 136 und dem Statorring 102 entspricht bzw. ein gewisses Übermaß gegenüber diesem Abstand aufweist. In diesem Falle werden die Lippen 128 zwischen dem Statorring 102 und die zweite Stirnfläche 136 der beiden Klemmringe 106 geklemmt, wodurch die Spulenträger 114 zusätzlich reibschlüssig an Ort und Stelle gehalten werden.

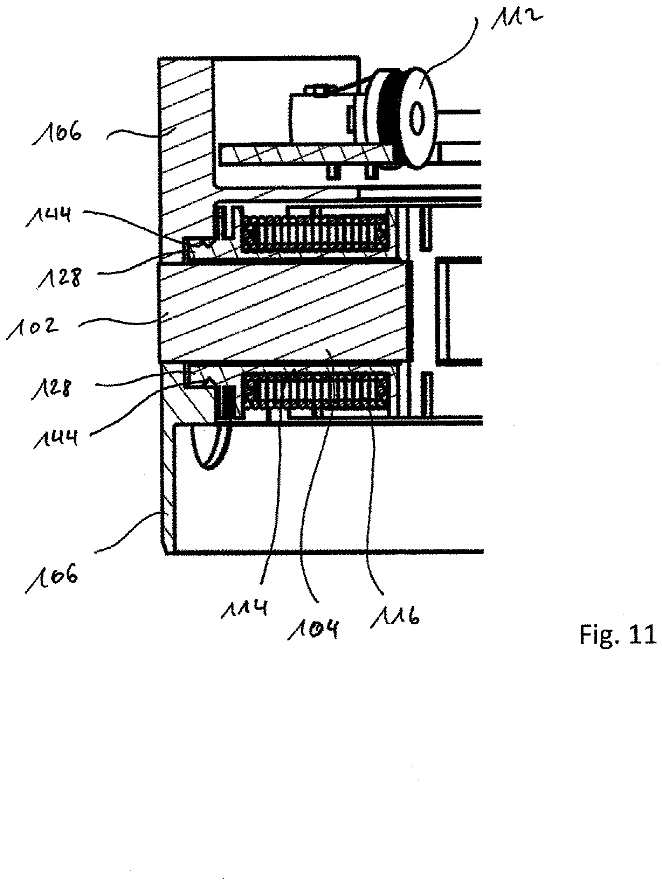

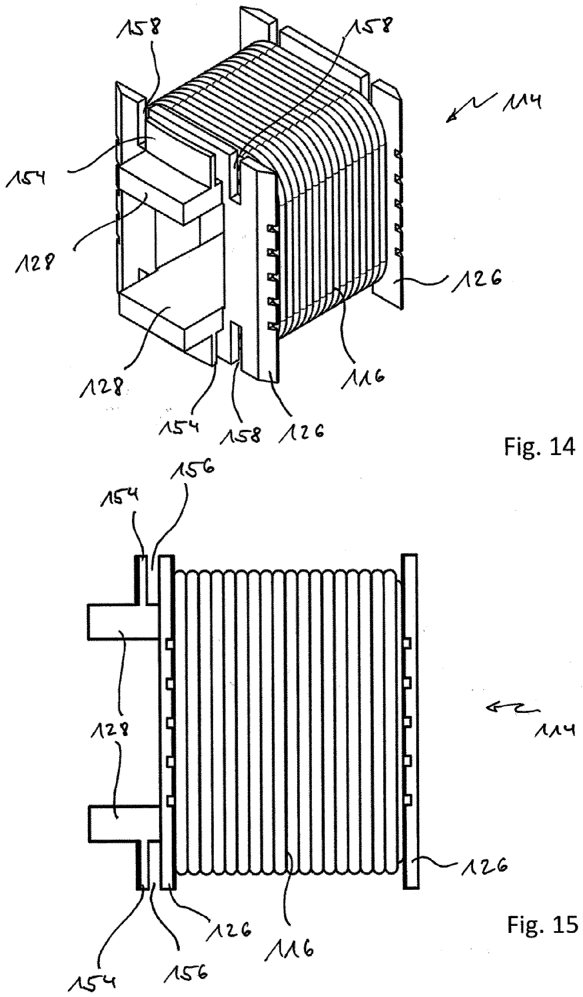

Im Folgenden wird nun unter Bezugnahme auf die Figs. 11 bis 15 eine weitere Ausführungsform beschrieben, bei der die Spulenträger 114 ebenfalls formschlüssig an den Klemmringen 106 fixiert sind bzw. werden. Wie hierbei insbesondere den Figs. 14 und 15 entnommen werden kann, sind bei dieser Ausführungsform an den freien Enden der Lippen 128 keine Vorsprünge 130 ausgebildet. Anstatt dessen verfügt die Stirnkontur des jeweiligen Klemmrings 106 über eine als Grat ausgebildete Schneidkante 144, die bei der Montage der Klemmringe 106 an dem Statorring 102 in axialer Richtung in die jeweilige Lippe 128 der Spulenträger 114 eingepresst wird.

Konkret verfügen auch bei dieser Ausführungsform die beiden Klemmringe 106 jeweils über eine ringförmig umlaufende Stirnkontur, welche eine ringförmig umlaufende erste Stirnfläche 142, die an dem Statorring 102 anliegt, und radial innerhalb der ersten Stirnfläche 142 die bereits erwähnte Schneidkante 144 aufweist, welche ebenfalls ringförmig umlaufend ausgebildet ist und in axialer Richtung von dem Statorring 102 sowie in radialer Richtung von der ersten Stirnfläche 142 beabstandet ist. Bei dieser Ausführungsform ist die axiale Dicke der jeweiligen Lippe 128 so zu wählen, dass diese etwas größer ist als der Abstand zwischen dem Grat der Schneidkante 144 und dem Statorring 102, damit sich die Schneidkante 144 in das Kunststoffmaterial der Lippe 128 eingraben kann, wenn die Klemmringe 128 in axialer Richtung gegen den Statorring 102 verspannt werden.

Bei den beiden zuvor beschriebenen Ausführungsformen kann es zusätzlich oder alternativ vorgesehen sein, dass an der Oberfläche der Durchgangsöffnung 120 eines jeden Spulenträgers 144 ein oder mehrere Erhebungen ausgebildet sind, über die der jeweilige Spulenträger 114 reibschlüssig auf dem jeweiligen Zahn 104 des Statorrings 102 gesichert werden kann. So sind beispielsweise gemäß den Figs. 16 und 17 an den in Umfangsrichtung einander gegenüberliegenden Oberflächen der Durchgangsöffnung 120 jeweils zwei sich in radialer Richtung erstreckende Rippen 146 ausgebildet. Die in Umfangsrichtung des Radialmagnetlagers 100 gemessene der Höhe dieser Rippen 146 ist dabei so gewählt, dass der lichte Abstand zwischen zwei in Umfangsrichtung einander gegenüberliegenden Rippen 146 etwas geringer ist als die Umfangsabmessung des jeweiligen Zahns 104. Beim Aufschieben der Spulenträger 114 auf die Zähne 104 werden daher die Rippen 146 geringfügig komprimiert, wodurch die Spulenträger 114 reibschlüssig auf dem jeweiligen Zahn 104 gesichert sind bzw. werden.

Zwar sind die in Rede stehenden Erhebungen hier als Rippen 164 ausgebildet; zusätzlich oder alternativ hierzu können die Erhebungen jedoch auch als lokal begrenzte Erhebungen wie zum Beispiel punktuelle Noppen mit konvexer Gestalt ausgebildet sein.

Zusätzlich oder alternativ zu der zuvor beschriebenen Ausführungsform, bei der es zu einem Reibschluss zwischen den Erhebungen und dem jeweiligen Zahn 104 kommt, kann es gemäß noch einer weiteren Ausführungsform vorgesehen sein, dass die Zähne 104 des Statorrings 102 komplementär zu den in Rede stehenden Erhebungen ausgebildete Ausnehmungen 148 aufweisen, in die die Erhebungen formschlüssig eingreifen: So sind bei der Ausführungsform gemäß den Figs. 18 und 19 die Erhebungen als sich in axialer Richtung erstreckende Rippen 105 und demgegenüber die Ausnehmungen 148 an den Zähnen 104 als sich in axialer Richtung erstreckende Nuten 152 ausgebildet, in die die Rippen 152 formschlüssig eingreifen können.

Egal ob es zwischen den in Rede stehenden Erhebungen und dem jeweiligen Zahn 104 zu einem Formschluss oder einem Reibschluss kommt, können die Erhebungen aus einem anderen Kunststoffmaterial als der Spulenträger 114 und insbesondere aus einem Kunststoffmaterial gefertigt sein, das einen geringeren Elastizitätsmodul aufweist als das Kunststoffmaterial des Spulenträgers 114. Die Erhebungen können sich somit beim Aufschieben der Spulenträger 114 auf den jeweiligen Zahn 104 leicht verformen, ohne dabei beschädigt zu werden.

Wie letztendlich den Figs. 7, 8, 14, 15, 16 und 19 entnommen werden kann, ist an der jeweiligen Lippe 128 der Spulenträger 114 ein sich in axialer Richtung erstreckender Steg 154 ausgebildet, welcher sich zwischen dem freien Ende und dem am ersten Ende der Buchse 118 befindlichen Flansch 126 befindet. Durch diese Stege 154 wird zusammen mit dem am ersten Ende 122 der Buchse 118 befindlichen Flansch 126 jeweils ein Kabelkanal 156 gebildet, in dem die die Magnetspule bestromenden Drähte geordnet in Umfangsrichtung des Radialmagnetlagers 100 verlegt werden können. Um die die jeweilige Magnetspule 116 bestromenden Drähte mit der jeweiligen Magnetspule 116 verbinden zu können, sind in dem am ersten Ende 122 der Buchse 118 befindlichen Flansch 126 zwei in Umfangsrichtung voneinander beabstandete Schlitze 158 ausgebildet, sodass die Drähte nicht über das axiale Ende der Flansche 126 hinweggeführt werden müssen.

### Bezugszeichenliste

- 11: Einlass
- 13: Auslass
- 15: Turbomolekularpumpstufe
- 17: Rotorelement, Rotorscheibe
- 19: Rotorelement, Holweckhülse
- 21: Rotor
- 22: Halter des Rotors
- 23: Statorelement, Statorscheibe bzw. Holweckstator
- 25: Spindeleinheit
- 27: Spindelgehäuse
- 29: Welle
- 31: Antriebsmotor
- 35: Drehachse
- 37: Zwischenraum
- 39: axiale Sperrstufe
- 39a: Anordnung konzentrischer Wandabschnitte
- 39b: Anordnung konzentrischer Wandabschnitte
- 41: radiale Sperrstufe
- 41a: Holweckgewinde
- 41b: Holweckfläche
- 43: Holweckpumpsystem
- 45: Ausgang des Holweckpumpsystems
- 47: Träger
- 49: Pumpengehäuse
- 50: Zwischenstück
- 51: Unterteil
- 52: Deckelelement
- 53: aktives radiales Magnetlager
- 54: Axialsensor
- 55: aktives axiales Magnetlager
- 56: Lagerfassung
- 57: Notlager
- 58: Stirnabschnitt
- 59: Sperrgasanschluss
- 61: Schraube
- 63: Lagerscheibe
- 100: Radialmagnetlager
- 102: Statorring
- 104: Zähne
- 106: Klemmringe
- 108: Schrauben
- 110: Axialbohrungen
- 112: Positionssensoren
- 114: Spulenträger
- 116: Magnetspule
- 118: Buchse
- 120: Durchgangsöffnung
- 122: erstes Ende
- 124: zweites Ende
- 126: Flansche
- 128: Lippen
- 130: Vorsprünge
- 132: Hinterschneidung
- 134: erste Stirnfläche
- 136: zweite Stirnfläche
- 138: Nut
- 140: Grat
- 142: erste Stirnfläche
- 144: Schneidkante
- 146: radiale Rippen
- 148: Ausnehmungen
- 150: axiale Rippen
- 152: Nut
- 154: Steg
- 156: Kabelkanal
- 158: Schlitze

## Patentansprüche

1. Aktives Radialmagnetlager (100) zur drehbaren Lagerung einer einen Pumpmechanismus einer Vakuumpumpe, insbesondere einer Turbomolekularpumpe, antreibenden Welle (29), umfassend:
- einen Statorring (102), der einen Stapel mehrerer Blechringe umfasst, die gemeinsam mehrere entlang eines Innenumfangs des Statorrings (102) voneinander beabstandete Zähne (104) zur Aufnahme jeweiliger Magnetspulen (116) bilden;
- mehrere Spulenträger (114), die jeweils eine Durchgangsöffnung (120) aufweisen und jeweils eine Magnetspule (116) aufnehmen;
wobei sich ein jeder Zahn (104) zur Aufnahme einer Magnetspule (116) in die Durchgangsöffnung (120) eines jeweiligen Statorrings (102) erstreckt; und
wobei das Radialmagnetlager (100) ferner über mehrere Form- und/oder Reibschlussmittel verfügt, mittels derer die Spulenträger (114) an Ort und Stelle gehalten werden.

2. Aktives Radialmagnetlager (100) nach Anspruch 1,
wobei ferner zwei Klemmringe (106) vorgesehen sind, zwischen denen sich der Statorring (102) befindet und die miteinander verspannt sind, wobei die Spulenträger (114) form- und/oder reibschlüssig, insbesondere formschlüssig, an zumindest einem der Klemmringe (106) gesichert ist.

3. Aktives Radialmagnetlager (100) nach Anspruch 2,
wobei zumindest einer der beiden Klemmringe (106) eine ringförmig umlaufende Stirnkontur aufweist, welche teilweise an dem Statorring (102) anliegt und eine Hinterschneidung (132) ausbildet; und
wobei der jeweilige Spulenträger (114) zumindest eine sich radial nach außen erstreckende Lippe (128) aufweist, an deren freien Ende ein sich in axialer Richtung erstreckender Vorsprung (130) ausgebildet ist, welcher formschlüssig in die Hinterschneidung (132) der Stirnkontur des jeweiligen Klemmrings (106) eingreift.

4. Aktives Radialmagnetlager (100) nach Anspruch 3,
wobei die Stirnkontur umfasst:
eine ringförmig umlaufende erste Stirnfläche (134), die an dem Statorring (102) anliegt;
radial innerhalb der ersten Stirnfläche (134) eine ringförmig umlaufende zweite Stirnfläche (136), die in axialer Richtung von dem Statorring (102) beabstandet ist; und
eine ringförmig umlaufende Nut (138) zwischen der ersten und der zweiten Stirnfläche (136), die die Hinterschneidung (132) des jeweiligen Statorrings (102) bildet.

5. Aktives Radialmagnetlager (100) nach Anspruch 4,
wobei die jeweilige Lippe (128) des Spulenträgers (114) eine Dicke aufweist, die dem Abstand zwischen der zweiten Stirnfläche (136) und dem Statorring (102) entspricht.

6. Aktives Radialmagnetlager (100) nach Anspruch 4 oder 5,
wobei der Vorsprung (130) der jeweiligen Lippe (128) eine Axialerstreckung aufweist, die größer ist als die Tiefe der Nut (138) gegenüber der ersten Stirnfläche (134);
wobei es vorzugsweise vorgesehen ist, dass das freie Ende des jeweiligen Vorsprungs (130) einen Grat (140) ausbildet.

7. Aktives Radialmagnetlager (100) nach Anspruch 2,
wobei zumindest einer der beiden Klemmringe (106) eine ringförmig umlaufende Stirnkontur aufweist, welche eine ringförmig umlaufende erste Stirnfläche (134), die an dem Statorring (102) anliegt, und radial innerhalb der ersten Stirnfläche (134) eine ringförmig umlaufende Schneidkante (144) aufweist, welche in axialer Richtung von dem Statorring (102) und in radialer Richtung von der ersten Stirnfläche (134) beabstandet ist; und
wobei der Spulenträger (114) zumindest eine sich radial nach außen erstreckende Lippe (128) aufweist, in die die Schneidkante des jeweiligen Klemmrings (106) zur Erzeugung eines Formschlusses eingepresst ist.

8. Aktives Radialmagnetlager (100) nach zumindest einem der voranstehenden Ansprüche,
wobei die Durchgangsöffnung (120) eines jeden Spulenträgers (114) eine Oberfläche aufweist, an der eine oder mehrere Ehebungen ausgebildet sind.

9. Aktives Radialmagnetlager (100) nach Anspruch 8,
wobei die Ehebungen durch den von der jeweiligen Durchgangsöffnung (120) aufgenommenen Zahn (104) komprimiert sind, wodurch der betroffene Spulenträger (114) reibschlüssig auf dem Zahn (104) gesichert ist.

10. Aktives Radialmagnetlager (100) nach Anspruch 8 oder 9,
wobei die Erhebungen als punktuelle Noppen und/oder als sich in radialer Richtung erstreckende Rippen (146) ausgebildet sind.

11. Aktives Radialmagnetlager (100) nach zumindest einem der Ansprüche 8 bis 10,
wobei der sich in die Durchgangsöffnung (120) erstreckende Zahn (104) eine oder mehrere Ausnehmungen (148) aufweist, welche komplementär zu der einen oder der mehreren Ehebungen ausgebildet sind und diese formschlüssig aufnehmen.

12. Aktives Radialmagnetlager (100) nach Anspruch 11,
wobei die Erhebungen als sich in axialer Richtung erstreckende Rippen (150) und die Ausnehmungen (148) als sich in axialer Richtung erstreckende Nuten (152) ausgebildet sind, in die die Rippen (150) formschlüssig eingreifen.

13. Aktives Radialmagnetlager (100) nach zumindest einem der Ansprüche 8 bis 12,
wobei die Spulenträger (114) aus einem ersten Kunststoffmaterial gefertigt sind, wobei es vorzugsweise vorgesehen ist, dass die Erhebungen aus einem zweiten Kunststoffmaterial gefertigt sind, das einen geringen Elastizitätsmodul als das erste Kunststoffmaterial aufweist.

14. Aktives Radialmagnetlager (100) nach zumindest einem der voranstehenden Ansprüche,
wobei jeder Spulenträger (114) eine Buchse (118) mit einem ersten und einem zweiten Ende (122, 124) umfasst, wobei die Buchse (118) an ihren beiden Enden (122, 124) jeweils einen Flansch (126) zur Begrenzung eines Aufnahmebereichs für die Magnetspule (116) aufweist.

15. Aktives Radialmagnetlager (100) nach Anspruch 14 und zumindest einem der Ansprüche 3 bis 13,
wobei sich die zumindest eine Lippe (128) des Spulenträgers (114) vom ersten Ende (122) der Buchse (118) radial nach außen erstreckt, wobei an der Lippe (128) zwischen deren freien Ende und dem am ersten Ende (122) der Buchse (118) befindlichen Flansch (126) ein sich in axialer Richtung erstreckender Steg (154) ausgebildet ist, der zusammen mit dem am ersten Ende der Buchse (118) befindlichen Flansch (126) einen Kabelkanal (156) zur Aufnahme der die Magnetspule (116) bestromenden Drähte definiert.

16. Aktives Radialmagnetlager (100) nach Anspruch 14 oder 15,
wobei in dem am ersten Ende (122) der Buchse (118) befindlichen Flansch (126) zumindest ein Schlitz (158) zur Hindurchführung von die der Magnetspule (116) bestromenden Drähten ausgebildet ist.

17. Vakuumpumpe, insbesondere Turbomolekularpumpe, mit wenigstens einem aktiven Radialmagnetlager (100) gemäß zumindest einem der voranstehenden Ansprüche, wobei das Radialmagnetlager (100) eine einen Rotor der Vakuumpumpe antreibende Welle (29) drehbar lagert.
